# EUROPEAN PATENT APPLICATION

(11) **EP 4 677 994 A1**
(43) Date of publication of application: **14.01.2026**
(21) Application number: 25180055.3
(22) Date of filing: 02.06.2025
(51) Int. Cl.: A01F 15/08, B30B 9/30

(54) **BALE EJECTION SYSTEM FOR LARGE SQUARE BALER**

(30) Priority: 12.07.2024 US 202463670152 P; 05.05.2025 US 202519198698
(71) Applicant: Deere & Company, Moline, IL 61265 (US)
(72) Inventor: Ghatage, Virendra, Mannheim (DE); Hallale, Sanjeev M., Mannheim (DE); Pieper, Mark, Mannheim (DE); Baul, Biswapriya, Mannheim (DE); Tippabhatla, Karthikeya, Mannheim (DE); Pawar, Ajit, Mannheim (DE); Navgire, Mayuri, Mannheim (DE)
(74) Representative: Stein, Stefan

(57) **Abstract**

A bale ejection system includes an outer carrier plate an inner carrier plate, and a linear actuator attached to the inner carrier plate. A bale spear is coupled to the outer carrier plate via a linkage bar. A return stroke latch system secures the outer carrier plate relative to the frame during an initial portion of a return stroke while allowing the inner carrier plate to move along a longitudinal axis in a second longitudinal direction during the initial portion of the return stroke, whereby the linkage bar moves the bale spear along a spear axis from an extended position into a retracted position for disengaging from the bale.

## Description

### CROSS-REFERENCE TO RELATED APPLICATIONS

This application claims the benefit of U.S. Provisional Patent Application Serial No. 63/670,152, filed on July 12, 2024, the disclosure of which is hereby incorporated by reference.

### TECHNICAL FIELD

The disclosure generally relates to a baler implement having a bale ejection system.

### BACKGROUND

Some baler implements, such as a large square baler, produce a bale in a compression chamber having a parallelepiped shape. As the bale is formed, the bale is moved from the compression chamber onto a discharge chute. Subsequently produced bales push the previously formed bale out of the discharge chute to eject the previously formed bale from the baler implement, and onto a ground surface, trailer, wrapping implement, etc. However, if no subsequent bale is formed, then the last bale is not ejected from the discharge chute.

In order to eject the last bale formed, the baler implement may include a bale ejection system. The bale ejection system may include a pawl that is actively and positively wedged into the bale to engage the bale when moved longitudinally rearward during a push stroke to eject the bale. The pawl is generally retracted passively via gravity and/or downward forces applied by the bale to disengage from the bale when moved longitudinally forward. The bale ejection system may be continuously operated in a cyclical manner to move the bale rearward until the bale is discharged from the bale chute.

During operation, the region in the bale forming panel in which the pawl retracts into may become filled and/or plugged with crop material, thereby limiting and/or preventing full and complete withdrawal of the pawl from the bale. As such, the passive retraction system may be unable to fully retract the pawl from the bale. If the pawl is not fully retracted, the pawl will rip out a groove of the crop material during the return stroke in which the pawl is moved longitudinally forward, which in turn reduces its effectiveness in the subsequent push stroke.

### SUMMARY

A bale ejection system for a baler implement is provided. The bale ejection system includes a frame rail extending along a longitudinal axis. An outer carrier plate and an inner carrier plate are moveably supported by the frame rail for movement relative to the frame rail along the longitudinal axis. A linear actuator is attached to the inner carrier plate and operable to extend during a push stroke to move the inner carrier plate and the outer carrier plate in a first longitudinal direction parallel to and along the longitudinal axis. The linear actuator is operable to retract during a return stroke to move the inner carrier plate and the outer carrier plate in a second longitudinal direction opposite to the first longitudinal direction and parallel to and along the longitudinal axis. A bale spear is coupled to the outer carrier plate via a linkage bar. The linkage bar is configured to move the bale spear relative to the outer carrier plate and the inner carrier plate between a retracted position and an extended position along a spear axis. The spear axis is perpendicular to the longitudinal axis of the frame rail. A push stroke latch system interconnects the frame, the inner carrier plate and the outer carrier plate. The push stroke latch system is configured to secure the outer carrier plate relative to the frame during an initial portion of the push stroke while allowing the inner carrier plate to move along the longitudinal axis in the first longitudinal direction during the initial portion of the push stroke, whereby the linkage bar moves the bale spear along the spear axis from the retracted position into the extended position for penetrating into a bale. A return stroke latch system interconnects the frame, the inner carrier plate and the outer carrier plate. The return stroke latch system is configured to secure the outer carrier plate relative to the frame during an initial portion of the return stroke while allowing the inner carrier plate to move along the longitudinal axis in the second longitudinal direction during the initial portion of the return stroke, whereby the linkage bar moves the bale spear along the spear axis from the extended position into the retracted position for disengaging from the bale.

In one aspect of the disclosure, the return stroke latch system is configured to release the outer carrier plate from the frame rail after the initial portion of the return stroke to allow combined movement of the outer carrier plate with the inner carrier plate in the second longitudinal direction along the longitudinal axis.

In one aspect of the disclosure, the return stroke latch system may include an inner plate cam driver attached to and moveable with the inner carrier plate along the longitudinal axis, and an outer plate cam driver attached to and moveable with the outer carrier plate along the longitudinal axis. Due to the relative movement between the inner carrier plate and the outer carrier plate, the inner plate cam driver and the outer plate cam driver may be spaced apart from each other along the longitudinal axis a distance equal to a length of the initial portion of the return stroke along the longitudinal axis. In one implementation, the inner plate cam driver includes a pin extending outwardly away from the inner carrier plate in a direction transverse to the longitudinal axis of the frame rail, and the outer plate cam driver includes a pin extending outwardly away from the outer carrier plate in a direction transverse to the longitudinal axis of the frame rail.

In one aspect of the disclosure, the return stroke latch system may include a base plate that is fixedly attached to the frame rail. A cam plate may be moveably coupled to the base plate for movement along a latch axis. The latch axis is transverse to the longitudinal axis of the frame rail. A biasing device may engage the cam plate and be configured to bias the cam plate in a first latch direction along the latch axis and into a latch position. The biasing device may include, for example, but is not limited to, at least one coil spring.

In one aspect of the disclosure, the cam plate may include an inner plate cam surface arranged for engagement with the inner plate cam driver. The inner plate cam surface includes a first wedge portion. The inner plate cam driver engages the first wedge portion of the inner plate cam surface during movement of the inner plate cam driver in the first longitudinal direction along the longitudinal axis during the push stroke to move the cam plate in a second latch direction along the latch axis and out of the latch position allowing the inner plate cam driver to move past the cam plate. The second latch direction is opposite the first latch direction.

In one aspect of the disclosure, the cam plate may include an outer plate cam surface arranged for engagement with the outer plate cam driver. The outer plate cam surface includes a ramp portion and a notch portion. The outer plate cam driver engages the ramp portion of the outer plate cam surface during movement of the outer plate cam driver in the first longitudinal direction along the longitudinal axis during the push stroke to move the cam plate in the second latch direction along the latch axis allowing the outer plate cam driver to move past the ramp portion and into the notch portion. Upon the outer plate cam driver moving into the notch portion of the outer plate cam surface, the biasing device is operable to bias the cam plate in the first latch direction along the latch axis into the latch position to capture the outer plate cam driver within the notch portion at the end of the push stroke. The capture of the outer plate cam driver within the notch portion of the outer plate cam surface holds the outer carrier plate in place relative to the inner carrier plate during the initial portion of the return stroke.

In one aspect of the disclosure, the inner plate cam surface may further include a second wedge portion. The inner plate cam driver engages the second wedge portion of the inner plate cam surface during movement of the inner plate cam driver in the second longitudinal direction along the longitudinal axis during the return stroke to move the cam plate in the second latch direction along the latch axis and out of the latch position, thereby allowing the inner plate cam driver to moves past the cam plate and releasing the outer plate cam driver from the notch portion of the outer plate cam surface at the end of the initial portion of the return stroke. With the outer plate cam driver released from the notch portion of the outer plate cam surface, the outer carrier plate is free to move with the inner carrier plate through the remainder of the return stroke.

In one aspect of the disclosure, the return stroke latch system may include a housing plate forming an interior cavity formed to capture a base portion of the cam plate, such that the base portion of the cam plate is moveable within the interior cavity along the latch axis.

In one aspect of the disclosure, the biasing device may be disposed within the interior cavity. The biasing device may be configured to bias the cam plate against the housing plate.

In one aspect of the disclosure, the return stroke latch system may include a cover attached to the housing plate and configured to seal the interior cavity.

In one aspect of the disclosure, the push stroke latch system is configured to release the outer carrier plate from the frame rail after the initial portion of the push stroke to allow combined movement of the outer carrier plate with the inner carrier plate in the first longitudinal direction along the longitudinal axis.

In one aspect of the disclosure, the linkage bar may include a first end rotatably coupled to inner carrier plate for rotation about a linkage axis. The linkage axis is disposed transverse to the longitudinal axis of the frame rail. The linkage bar extends from the first end thereof to a distal second end.

In one aspect of the disclosure, the bale spear may be coupled to the distal second end of the linkage bar. In response to relative movement between in the inner carrier plate and the outer carrier plate, the linkage bar may be configured to move the bale spear relative to the outer carrier plate and the inner carrier plate between a retracted position and an extended position along a spear axis. The spear axis is perpendicular to the longitudinal axis of the frame rail.

In one aspect of the disclosure, the linkage bar may define a slot extending at an angle relative to the longitudinal axis of the frame rail. The outer carrier plate may include a linkage pin slidably disposed within the slot. relative movement between in the inner carrier plate and the outer carrier plate moves the linkage pin within the slot. Because the slot is disposed at an angle relative to the longitudinal axis, the movement of the linkage pin within the slot causes the linkage bar to pivot about the linkage axis, thereby moving the bale spear along the spear axis. In one aspect of the disclosure, movement of the linkage pin within the linkage slot in the first longitudinal direction along the longitudinal axis moves the distal second end of the linkage bar toward the inner carrier plate and the outer carrier plate to thereby move the bale spear along the spear axis from the retracted position into the extended position for penetrating into a bale. Movement of the linkage pin within the linkage slot in the second longitudinal direction along the longitudinal axis moves the distal second end of the linkage bar away from the inner carrier plate and the outer carrier plate to thereby move the bale spear along the spear axis from the extended position into the retracted position for disengagement from a bale.

Accordingly, the bale ejection system provided herein provides positive and active insertion and retraction of the bale spear into and out of the bale respectively. The return stroke latch system ensures that the outer carrier plate remains stationary during the initial portion of the return stroke so that the linkage pin moves within the slot of the linkage bar to positively retract the bale spear from the bale. At the end of the initial portion of the return stroke, the return stroke latch system releases the outer carrier plate to move jointly with the inner carrier plate.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a baler implement.
FIG. 2 is a schematic perspective view of the baler implement.
FIG. 3 is a schematic perspective view of a bale ejection system of the baler implement.
FIG. 4 is a schematic perspective view of the bale ejection system.
FIG. 5 is a schematic side view of a bale spear and linkage system of the bale ejection system showing the bale spear and the linkage system in a retracted position.
FIG. 6 is a schematic side view of the bale spear and linkage system shown in an extended position.
FIG. 7 is a schematic perspective view of an alternative embodiment of the bale spear.
FIG. 8 is a schematic side view of a push stroke latch system of the bale ejection system shown at a beginning of a push stroke.
FIG. 9 is a schematic side view of the push stroke latch system shown at an end of an initial portion of the push stroke.
FIG. 10 is a schematic partially exploded perspective view of a return stroke latch system of the bale ejection system.
FIG. 11 is a schematic side view of the bale ejection system showing the return stroke latch system prior to actuation during a push stroke.
FIG. 12 is a schematic side view of the bale ejection system showing the return stroke latch system engaging an inner plate cam driver during the push stroke.
FIG. 13 is a schematic side view of the bale ejection system showing the return stroke latch system engaging an outer plate cam driver during the push stroke.
FIG. 14. is a schematic side view of the bale ejection system showing the return stroke latch system engaging the inner plate cam driver to release the outer plate cam driver during an initial portion of a return stroke.
FIG. 15 is a schematic side view of the bale ejection system showing the return stroke latch system after completion of the initial portion of the return stroke.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

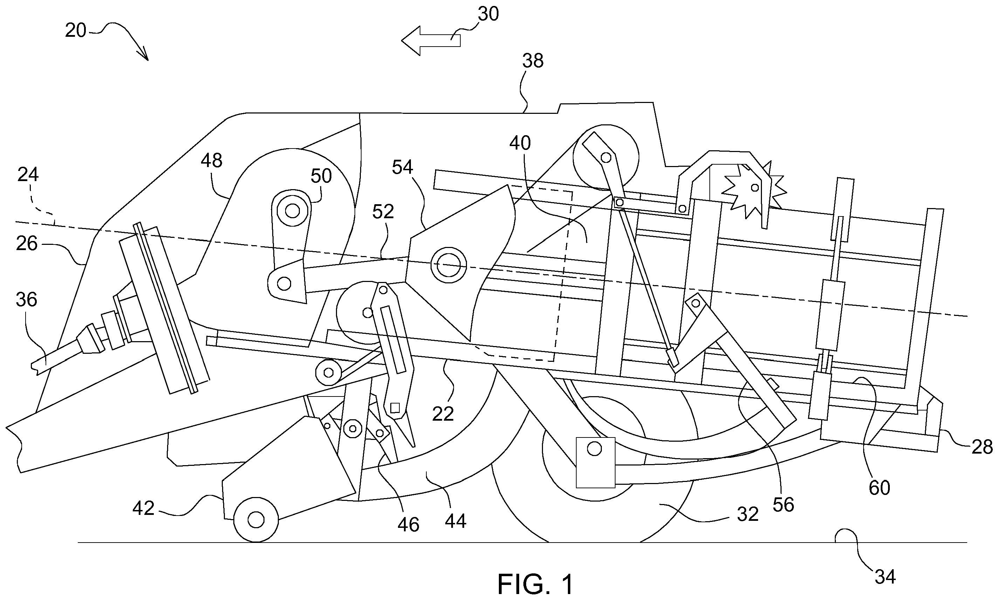

Referring to the Figures, wherein like numerals indicate like parts throughout the several views, a baler implement is generally shown at 20. Referring to FIGS. 1 the baler implement 20 is shown as a large square baler implement 20. However, it should be appreciated that the teachings of this disclosure may be applied to other baler platforms, such as a small square baler, a round baler, a bale hauler or trailer, etc., and are not limited to the example implementation of the large square baler shown in the Figures and described herein.

A traction unit or vehicle, such as but not limited to a tractor, may be coupled to the baler implement 20 for pulling and powering the baler implement 20. However, it should be appreciated that in other embodiments, the baler implement 20 may be self-propelled, in which case the traction unit and the baler implement 20 are configured as a single, self-propelled vehicle. The baler implement 20 may move across a field and gather and process crop material to form a bale. The baler implement 20 may then eject the formed bale from the rear of the baler implement 20.

Referring to FIG. 1, the exemplary embodiment of the baler implement 20 includes a main frame 22. The main frame 22 extends along a longitudinal baler axis 24 between a forward end 26 and a rearward end 28 relative to a direction of travel 30 of the baler implement 20 during operation. One or more ground engaging devices 32, such as but not limited to wheels, are coupled to the main frame 22 and support the baler implement 20 on a ground surface 34. The baler implement 20 includes an input shaft 36, such as a power-take-off (PTO) shaft, which can receive rotational power from a power source, such as the tractor.

The baler implement 20 includes a housing 38 or body, which generally shields various internal components of the baler implement 20. The housing 38 is attached to and supported by the main frame 22. The housing 38 includes multiple wall sections or panels that form and/or define a compression chamber 40. The compression chamber 40 may alternatively be referred to as a baling chamber. The compression chamber 40 is configured to form the bale therein. In the example implementation shown in the Figures and described herein, the bale includes a parallelepiped or rectangular shape.

The baler implement 20 includes a pick-up mechanism 42. The pick-up mechanism 42 is disposed proximate the forward end 26 of the frame. The pick-up mechanism 42 gathers crop material from the ground surface 34 and directs the gathered crop material toward and into an inlet of a pre-compression passageway 44, which stores a volume of gathered crop material. A feeder system 46 includes a plurality of forks, which are timed to move the crop material from the pre-compression passageway 44 into the compression chamber 40. The pickup may include, but is not limited to tines, forks, augers, conveyors, baffles, etc., for gathering and moving the crop material.

The input shaft 36 or PTO shaft is connected to an input of a transmission 48 to provide rotational power to the baler implement 20 from the tractor or other associated vehicle or power source. The transmission 48 includes a gearbox which converts the rotational motion of the input shaft 36 along a generally longitudinal axis 64 of the baler implement 20 to an output of the transmission 48 having a rotational motion along a generally transverse axis of the baler implement 20.

The baler implement 20 includes a crank arm 50 connected to the output of the transmission 48. A connecting link 52 interconnects the crank arm 50 and a plunger 54. The crank arm 50 rotates based upon the output of the transmission 48 and the plunger 54 moves in a reciprocal motion within the compression chamber 40 as the crank arm 50 rotates. The plunger 54 extends into the compression chamber 40, thereby compressing the crop material, and then at least partially retracts from the compression chamber 40, at which time the feeder system 46 moves more crop material into the compression chamber 40.

When the bale is completed within the compression chamber 40, a knotter system 56 wraps a plurality of twine strands around the bale to secure the shape of the bale. When the baler implement 20 is configured as the large square baler, such as described herein, the knotter system 56 wraps the twine around a longitudinal extent or longest length of the bale, with each individual twine strand encircling the bale. The knotter system 56 ties each end of the twine of each respective twine strand together to form a knot, securing each respective twine strand in place.

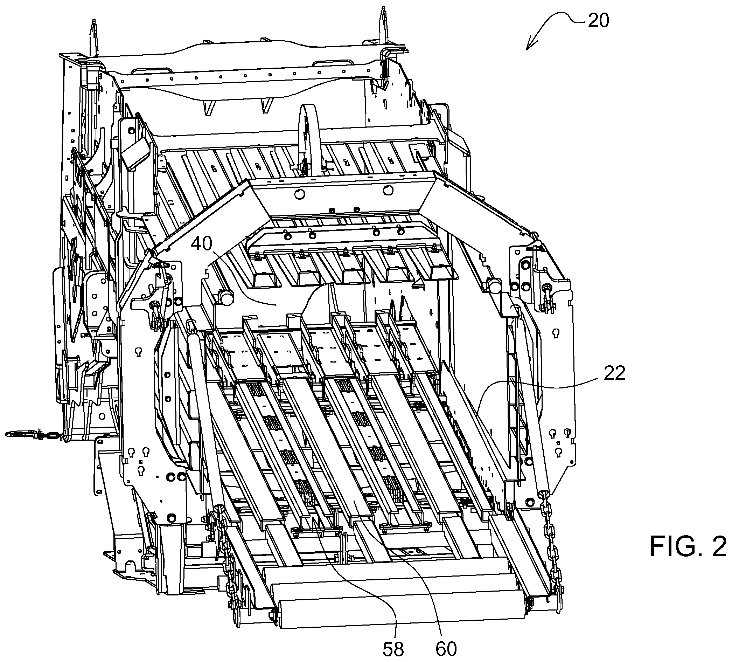

In the example implementation shown in the figures and described herein, a completed bale is pushed off the rearward end 28 of the baler implement 20 by a subsequently formed bale onto the ground surface 34, trailer, etc. Referring to FIG. 2, in order to discharge a bale that is the last bale of a harvesting period, or in order to discharge a bale when no subsequent bales are available to push the bale off the rearward end 28 of the baler implement 20, the baler implement 20 may be equipped with a bale ejection system 58. The bale ejection system 58 may be engaged to move the bale rearward along the longitudinal baler axis 24 and discharge the bale from the baler implement 20. As shown in FIG. 2, the bale ejection system 58 is shown incorporated into a bottom wall 60 of the compression chamber 40. However, it should be appreciated that in other implementations, the bale ejection system 58 may be incorporated into additional or other wall panels of the compression chamber 40.

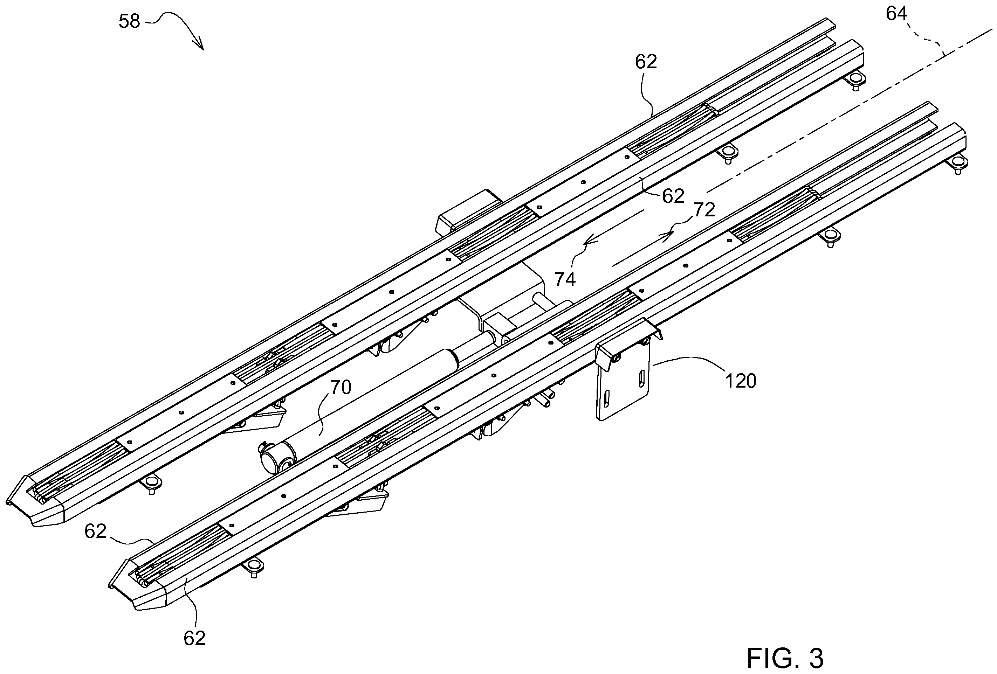

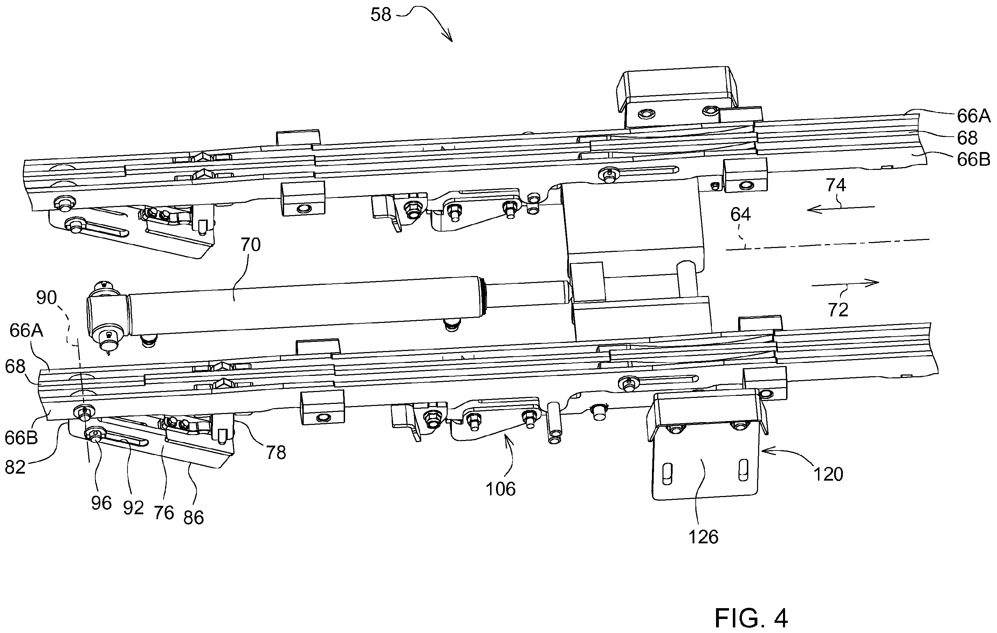

Referring to FIGS. 3 and 4, the bale ejection system 58 includes a frame rail 62 extending along a longitudinal axis 64. The longitudinal axis 64 of the bale ejection system 58 may be coaxial and/or parallel with the longitudinal baler axis 24. The frame rail 62 extends along and is generally parallel with the longitudinal axis 64. The frame rail 62 may be fixedly and/or rigidly attached to the main frame 22 of the baler implement 20 and configured to support the various components of the bale ejection system 58 described below.

As shown in FIG. 4, the bale ejection system 58 described herein includes an outer carrier plate 66A, 66B and an inner carrier plate 68. The example implementation shown in the Figures and described herein includes a first outer carrier plate 66A and a second outer carrier plate 66B disposed on opposing lateral sides of the inner carrier plate 68. However, other implementations may include only a single outer carrier plate, i.e., only one of the first outer carrier plate 66A or the second outer carrier plate 66B. The outer carrier plates 66A, 66B and the inner carrier plate 68 are moveably supported by the frame rail 62 for movement relative to the frame rail 62 along the longitudinal axis 64. Additionally, the outer carrier plates 66A, 66B are moveable relative to the inner carrier plate 68 along the longitudinal axis 64.

The bale ejection system 58 includes a linear actuator 70 that is directly attached to the inner carrier plate 68. The linear actuator 70 is operable to extend during a push stroke to move the inner carrier plate 68 and the outer carrier plate 66A, 66B in a first longitudinal direction 72 parallel to and along the longitudinal axis 64, and operable to retract during a return stroke to move the inner carrier plate 68 and the outer carrier plates 66A, 66B in a second longitudinal direction 74 opposite to the first longitudinal direction 72 and parallel to and along the longitudinal axis 64. For reference, and as used herein, the first longitudinal direction 72 along the longitudinal axis 64 is directed toward the rearward end 28 of the baler implement 20, whereas the second longitudinal direction 74 along the longitudinal axis 64 is directed toward the forward end 26 of the baler implement 20. It should be appreciated that the orientation of the linear actuator 70 and the first longitudinal direction 72 and the second longitudinal direction 74 may be reversed from the example implementation shown in the Figures and described herein. The linear actuator 70 may include for example, but is not limited to, a double acting hydraulic cylinder, an electric linear actuator 70, a pneumatic linear actuator 70, a rotary actuator in combination with a linkage system to generate linear movement, etc.

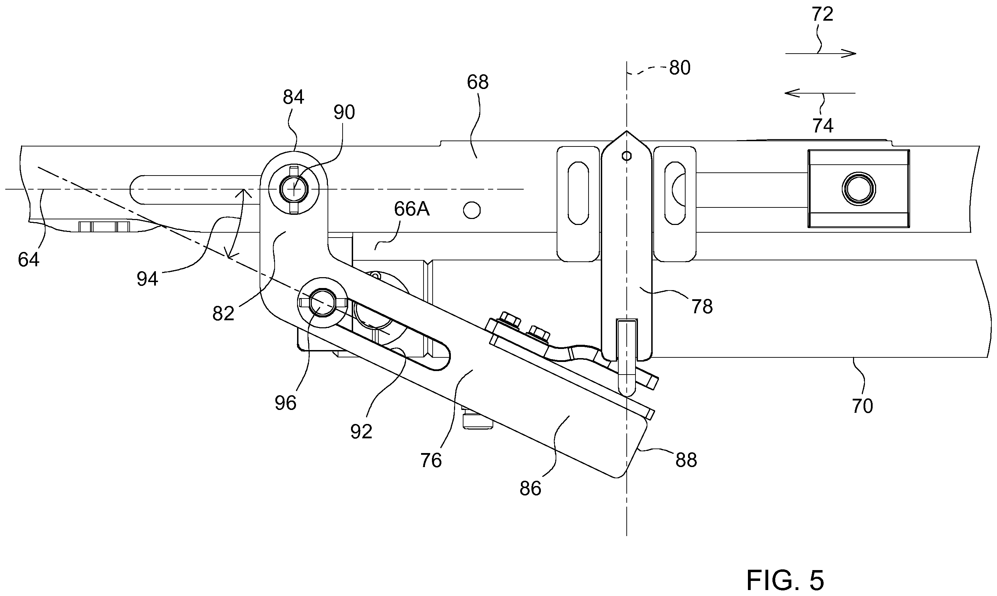

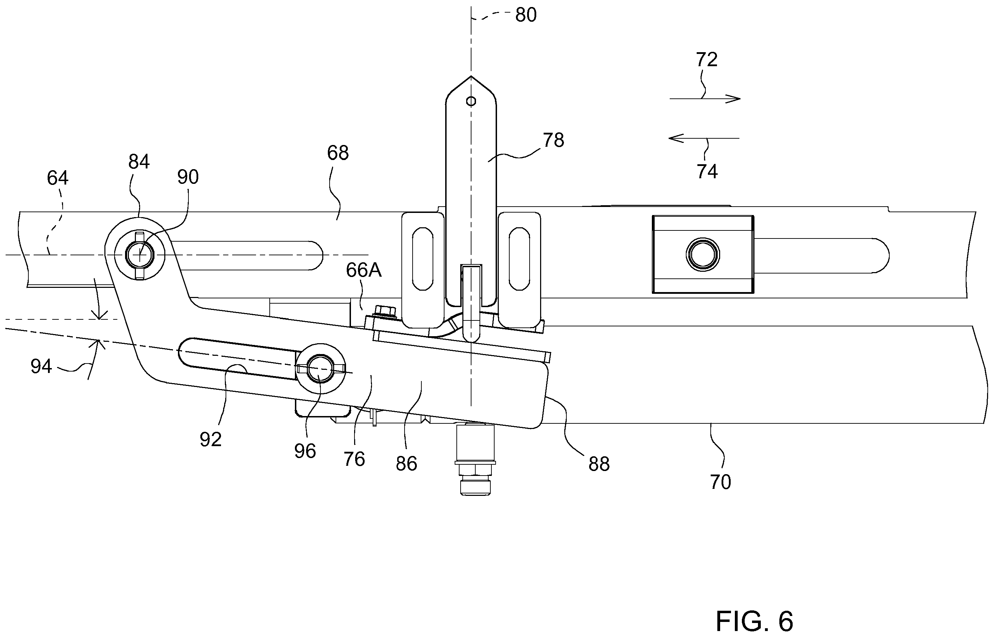

Referring to FIGS. 5 and 6, a linkage bar 76 couples a bale spear 78 to the outer carrier plate 66A, 66B. In response to relative movement between in the inner carrier plate 68 and the outer carrier plates 66A, 66B, the linkage bar 76 is configured to move the bale spear 78 relative to the outer carrier plates 66A, 66B and the inner carrier plate 68 along a spear axis 80, between a retracted position and an extended position. The spear axis 80 is generally perpendicular to the longitudinal axis 64 of the frame rail 62. In the example implementation shown in the Figures and described herein, the spear axis 80 is directed generally vertically. The linkage bar 76 includes a generally "L" shaped plate structure having a short leg 82 extending to a first end 84, and a long leg 86 extending to a distal second end 88. The first end 84 of the linkage bar 76 is rotatably coupled to the inner carrier plate 68 for rotation about a linkage axis 90. The linkage axis 90 is disposed transverse to the longitudinal axis 64 of the frame rail 62. The bale spear 78 is pivotably coupled to the distal second end 88 of the linkage bar 76.

The linkage bar 76 defines a slot 92 extending at an angle 94 relative to the longitudinal axis 64 of the frame rail 62. The slot 92 is disposed in the long leg 86 of the linkage bar 76. The inner carrier plate 68 includes a linkage pin 96 slidably disposed within the slot 92. The linkage pin 96 extends generally perpendicular to the plate structure of the outer carrier plates 66A, 66B, and generally perpendicular to the longitudinal axis 64 of the frame rail 62. Relative movement between the inner carrier plate 68 and the outer carrier plates 66A, 66B causes the linkage pin 96 to move within the slot 92 of the linkage bar 76. As shown in FIG. 5, with the outer carrier plates 66A, 66B remaining stationary, movement of the linkage pin 96 within the linkage slot 92 in the first longitudinal direction 72 along the longitudinal axis 64 moves the distal second end 88 of the linkage bar 76 toward the inner carrier plate 68 and the outer carrier plates 66A, 66B to thereby move the bale spear 78 along the spear axis 80 from the retracted position into the extended position for penetrating into the bale. As shown in FIG. 6, with the outer carrier plates 66A, 66B remaining stationary, movement of the linkage pin 96 within the linkage slot 92 in the second longitudinal direction 74 along the longitudinal axis 64 moves the distal second end 88 of the linkage bar 76 away from the inner carrier plate 68 and the outer carrier plates 66A, 66B to thereby move the bale spear 78 along the spear axis 80 from the extended position into the retracted position for disengagement from the bale.

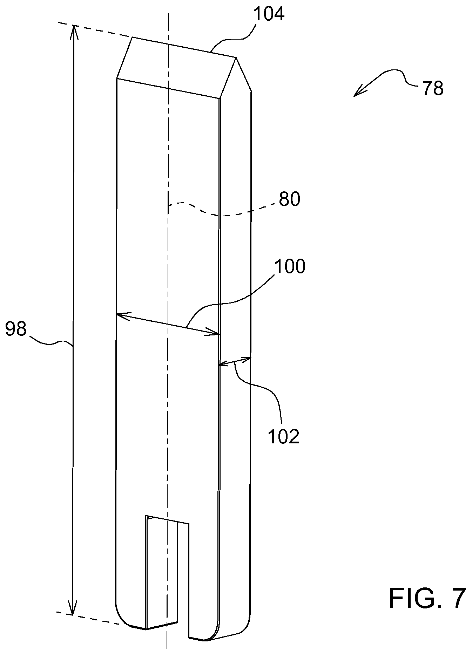

Referring to FIG. 7, one example implementation of the bale spear is shown in detail. The bale spear 78 may include, but is not limited to, a plate structure having a height 98 extending along the spear axis 80, and define a cross section perpendicular to the spear axis 80 presenting a long dimension 100 and a short dimension 102. The long dimension 100 of the cross-sectional shape of the bale spear 78 is arranged to be generally parallel with the longitudinal axis 64 of the frame rail 62. The short dimension 102 of the cross-sectional shape of the bale spear 78 is arranged to be generally transverse to the longitudinal axis 64 of the frame rail 62. An upper end of the bale spear 78 may define a knife edge 104 extending generally parallel with the longitudinal axis 64 of the frame rail 62, along the long dimension 100 of the cross-sectional shape of the bale spear 78.

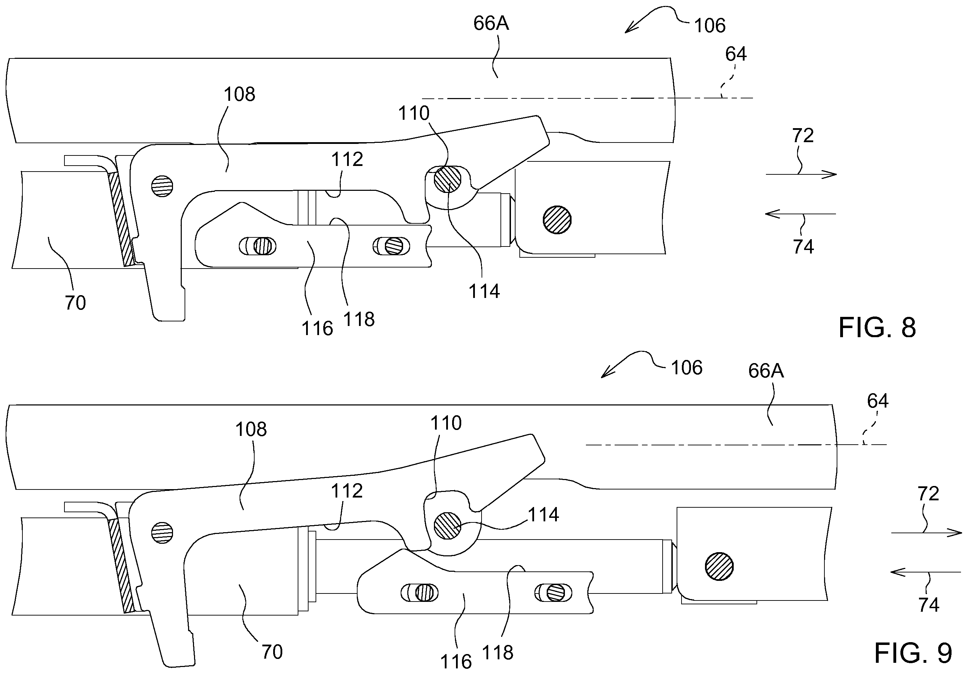

Referring to FIGS. 8 and 9, a push stroke latch system 106 interconnects the frame, the inner carrier plate 68 and the outer carrier plate 66A, 66B. The push stroke latch system 106 is configured to secure the outer carrier plates 66A, 66B relative to the frame during an initial portion of the push stroke while allowing the inner carrier plate 68 to move along the longitudinal axis 64 in the first longitudinal direction 72 during the initial portion of the push stroke, whereby the linkage bar 76 moves the bale spear 78 along the spear axis 80 from the retracted position into the extended position for penetrating into the bale. The push stroke latch system 106 is configured to release the outer carrier plates 66A, 66B from the frame rail 62 after the initial portion of the push stroke to allow combined and simultaneous movement of the outer carrier plates 66A, 66B with the inner carrier plate 68 in the first longitudinal direction 72 along the longitudinal axis 64.

The push stroke latch system 106 may include, for example, a latch plate 108 rotatably coupled to the frame rail 62. The latch plate 108 defines a pocket 110 and a lower cam surface 112. An outer plate cam driver 114 is attached to and moveable with the outer carrier plates 66A, 66B. A latch release 116 having an upper cam surface 118 is attached to and movable with the inner carrier plate 68. The upper cam surface 118 of the latch release 116 engages the lower cam surface 112 of the latch plate 108. As shown in FIG. 8, with the linear actuator 70 disposed in a fully retracted position, the outer plate cam driver 114 is disposed within the pocket 110 of the latch plate 108 in latched interlocking engagement therebetween. As the linear actuator 70 begins to extend during the initial portion of the push stroke, in the first longitudinal direction 72, the latch plate 108 holds the outer carrier plates 66A, 66B in position, thereby allowing the inner carrier plate 68 to move relative to the outer carrier plate 66A, 66B along the longitudinal axis 64 in the first longitudinal direction 72. As described above, with reference to FIG. 5, this relative movement causes the bale spear 78 to move from the retracted position into the extended position. As shown in FIG. 9, as the latch release 116 nears the end of the initial portion of the push stroke, the interaction between the upper cam surface 118 of the latch release 116 and the lower cam surface 112 on the latch plate 108 causes the latch plate 108 to rotate and move the pocket 110 relative to the outer plate cam driver 114, thereby releasing the outer plate cam driver 114 from the pocket 110 of the latch plate 108. Once the outer plate cam driver 114 is released from the pocket 110 of the latch plate 108, the inner carrier plate 68 and the outer carrier plates 66A, 66B are free to move together in simultaneous and combined movement in the first longitudinal direction 72.

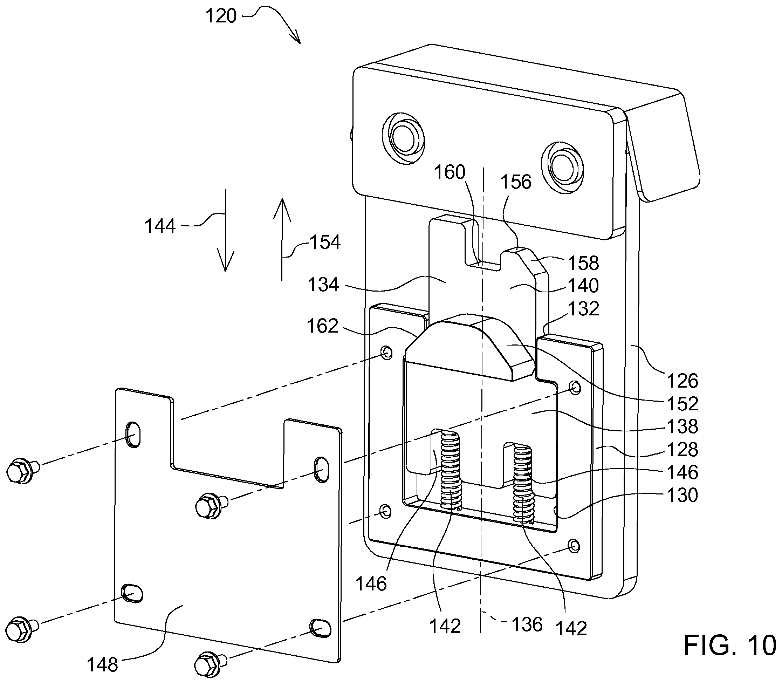

Referring to FIGS. 10-15, the bale ejection system 58 further includes a return stroke latch system 120 interconnecting the frame, the inner carrier plate 68 and the outer carrier plates 66A, 66B. The return stroke latch system 120 is configured to secure the outer carrier plates 66A, 66B relative to the frame during an initial portion of the return stroke while allowing the inner carrier plate 68 to move along the longitudinal axis 64 in the second longitudinal direction 74 during the initial portion of the return stroke, whereby the linkage bar 76 moves the bale spear 78 along the spear axis 80 from the extended position into the retracted position for disengaging from the bale. The return stroke latch system 120 is configured to release the outer carrier plates 66A, 66B from the frame rail 62 after the initial portion of the return stroke to allow combined movement of the outer carrier plates 66A, 66B with the inner carrier plate 68 in the second longitudinal direction 74 along the longitudinal axis 64.

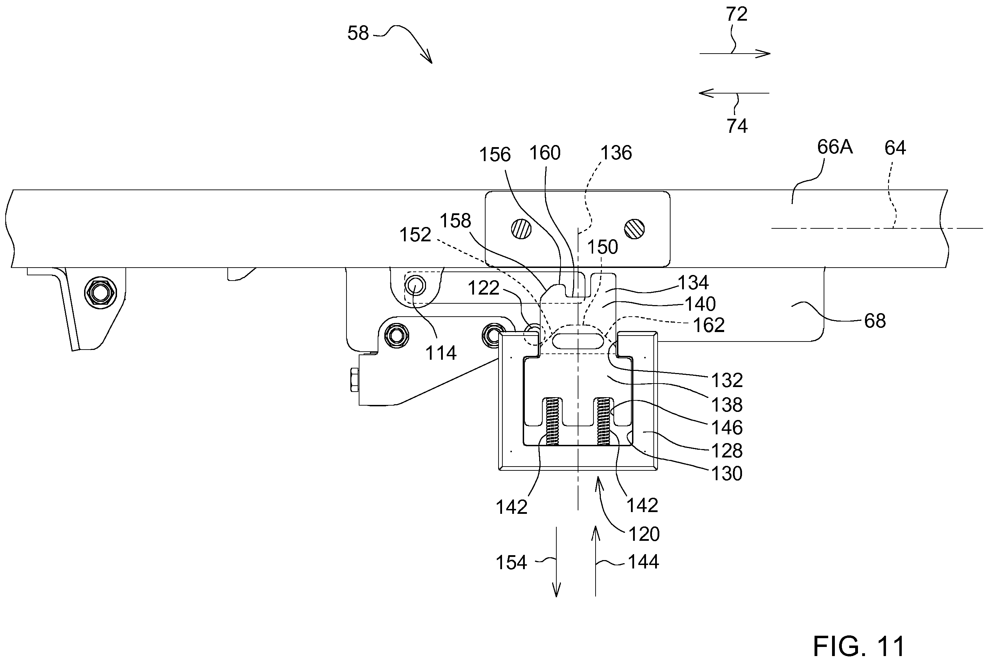

As shown in FIGS. 11-15, the return stroke latch system 120 includes the outer plate cam driver 114 attached to and moveable with the outer carrier plates 66A, 66B along the longitudinal axis 64, and an inner plate cam driver 122 attached to and moveable with the inner carrier plate 68 along the longitudinal axis 64. The inner plate cam driver 122 includes a pin or other similar structure extending outwardly away from the inner carrier plate 68 in a direction transverse to the longitudinal axis 64 of the frame rail 62. The outer plate cam driver 114 includes a pin or other similar structure extending outwardly away from the outer carrier plates 66A, 66B in a direction transverse to the longitudinal axis 64 of the frame rail 62. In one implementation, the outer plate cam driver 114 may extend between the first outer carrier plate 66A and the second outer carrier plate 66B. During relative movement therebetween, the inner plate cam driver 122 and the outer plate cam driver 114 may be spaced apart from each other along the longitudinal axis 64 a distance that is equal to a length 124 of the initial portion of the return stroke measured along the longitudinal axis 64, with the inner plate cam driver 122 positionable nearer the rearward end 28 of the baler implement 20 than the outer plate cam driver 114.

Referring to FIG. 10, the example implementation of the return stroke latch system 120 shown in the Figures and described herein includes a base plate 126 that is fixedly attached to the frame rail 62. A housing plate 128 is attached to the base plate 126. The housing plate 128 forms an interior cavity 130 having an opening 132. A cam plate 134 is moveably coupled to and/or supported by the base plate 126. The cam plate 134 is moveable along a latch axis 136. The latch axis 136 is transverse to the longitudinal axis 64 of the frame rail 62. The cam plate 134 includes a base portion 138 disposed within the interior cavity 130 of the housing plate 128. The interior cavity 130 is formed to capture the base portion 138 of the cam plate 134 therein, while allowing the cam plate 134 to move relative to the housing plate 128 and the base plate 126 along the latch axis 136. A protruding portion 140 of the cam plate 134 extends through the opening 132 of the interior cavity 130 of the housing plate 128.

The return stroke latch system 120 includes biasing device 142 engaged with the cam plate 134. The biasing device 142 is configured to bias the cam plate 134 in a first latch direction 144 along the latch axis 136 and into a latch position. In one example implementation, the biasing device 142 is disposed within the interior cavity 130, and is arranged to bias the cam plate 134 against the housing plate 128. In one implementation, the biasing device 142 may include, but is not limited to, at least one coil spring disposed between the cam plate 134 and the housing plate 128. One of the cam plate 134 and/or the housing plate 128 may include and/or define a retention feature 146 for securing the coil spring in place relative to the cam plate 134 and the housing plate 128. It should be appreciated that the biasing device 142 may be implemented differently than the example implementation of the coil spring. For example, the biasing device 142 may alternatively include, but is not limited to a leaf spring, an air spring, a spring plate, a wave spring, etc.

A cover 148 may be attached to the housing plate 128 and configured to seal the interior cavity 130. As such, the cam plate 134 is sandwiched between the base plate 126 and the cover 148, with the base portion 138 of the cam plate 134 bounded by the housing plate 128, and the protruding portion 140 of the cam plate 134 extending outwardly through the opening 132 in the housing plate 128. The protruding portion 140 may be sized to substantially fill the opening 132 of the housing plate 128 to prevent debris from entering into the interior cavity 130.

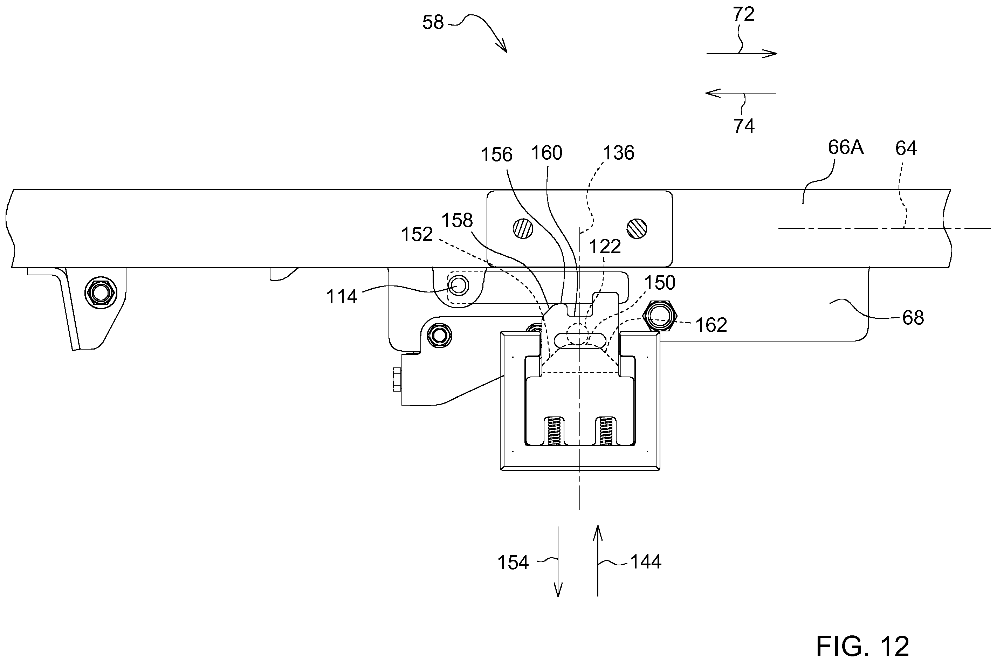

Referring to FIG. 10, the cam plate 134 includes an inner plate cam surface 150 that is arranged for engagement with the inner plate cam driver 122. The inner plate cam surface 150 includes a first wedge portion 152. Referring to FIGS. 11 and 12, the inner plate cam driver 122 engages the first wedge portion 152 of the inner plate cam surface 150 during movement of the inner plate cam driver 122 in the first longitudinal direction 72 along the longitudinal axis 64 during the push stroke to move the cam plate 134 in a second latch direction 154 along the latch axis 136 and out of the latch position thereby allowing the inner plate cam driver 122 to move past the inner plate cam surface 150 of the cam plate 134. Because the inner plate cam driver 122 and the outer plate cam driver 114 may be spaced apart from each other along the longitudinal axis 64, the inner plate cam driver 122 may engage and pass across the inner plate cam surface 150 prior to the outer plate cam driver 114 contacting the cam plate 134.

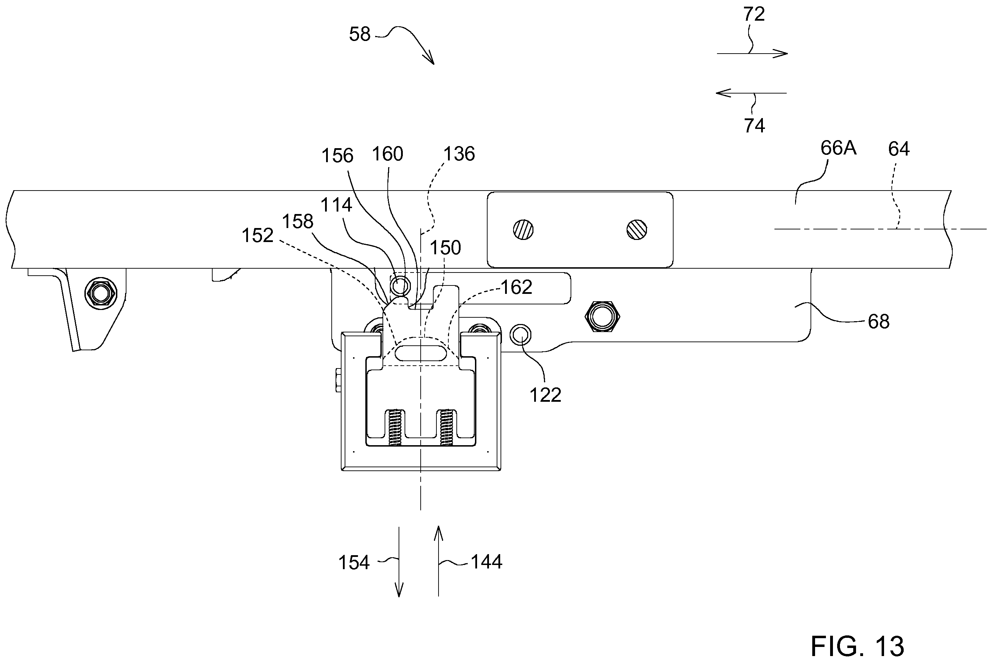

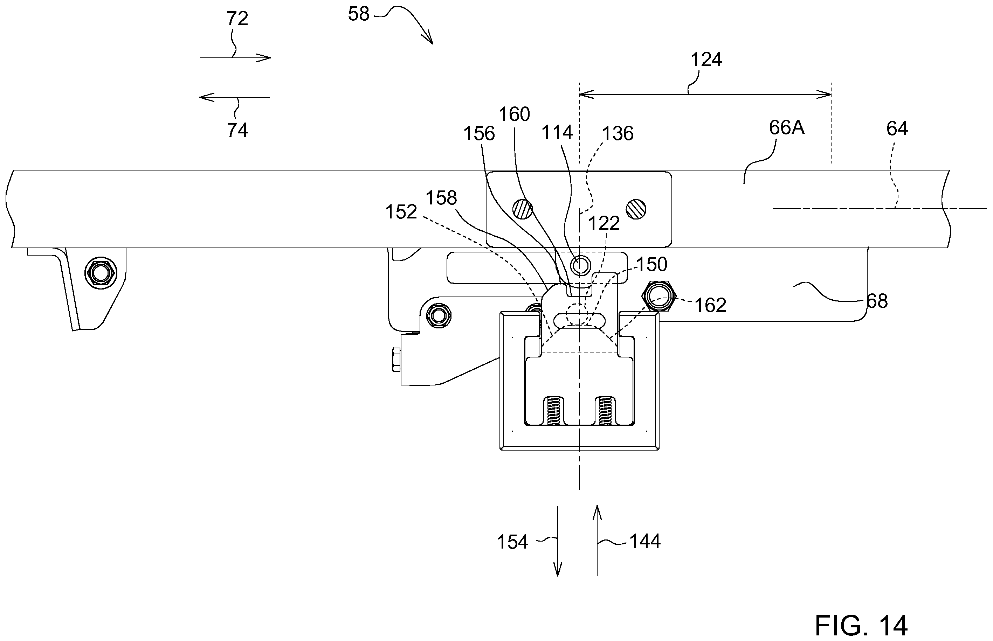

Referring to FIG. 10, the cam plate 134 includes an outer plate cam surface 156 that is arranged for engagement with the outer plate cam driver 114. The outer plate cam surface 156 includes a ramp portion 158 and a notch portion 160. Referring to FIGS. 13 and 14, the outer plate cam driver 114 engages the ramp portion 158 of the outer plate cam surface 156 during movement of the outer plate cam driver 114 in the first longitudinal direction 72 along the longitudinal axis 64 during the push stroke to move the cam plate 134 in the second latch direction 154 along the latch axis 136 allowing the outer plate cam driver 114 to move past the ramp portion 158 and into the notch portion 160, whereafter the biasing device 142 is operable to bias the cam plate 134 in the first latch direction 144 along the latch axis 136 to capture the outer plate cam driver 114 within the notch portion 160 at the end of the push stroke and hold the outer carrier plates 66A, 66B in place relative to the inner carrier plate 68 during the initial portion of the return stroke.

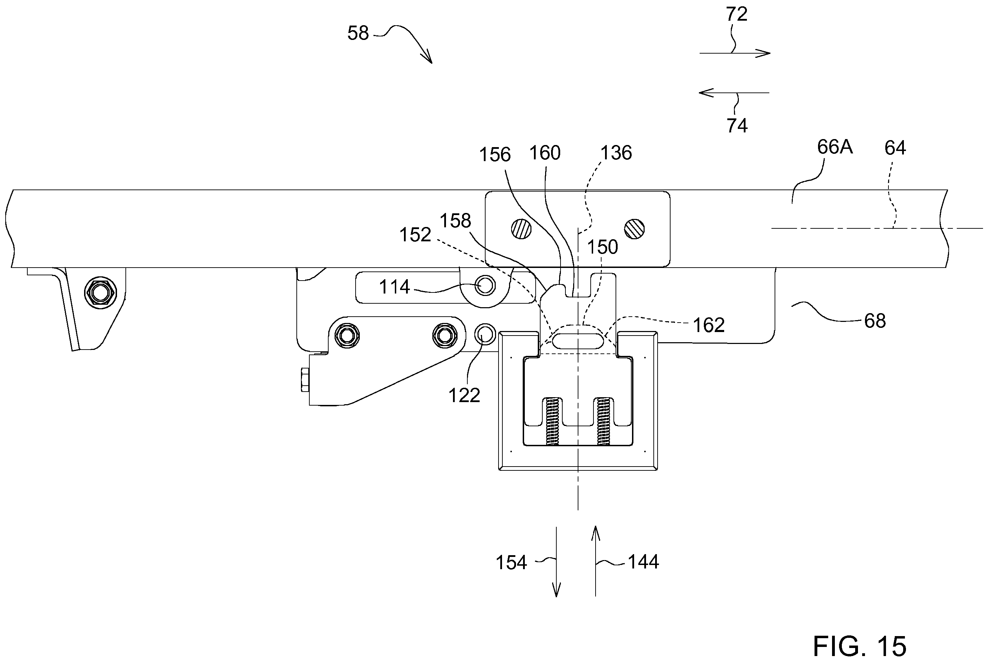

Referring to FIG. 10, the inner plate cam surface 150 includes a second wedge portion 162. Referring to FIGS. 14 and 15, the inner plate cam driver 122 engages the second wedge portion 162 of the inner plate cam surface 150 during movement of the inner plate cam driver 122 in the second longitudinal direction 74 along the longitudinal axis 64 during the return stroke to move the cam plate 134 in the second latch direction 154 along the latch axis 136 and out of the latch position allowing the inner plate cam driver 122 to move past the cam plate 134, and simultaneously releasing the outer plate cam driver 114 from the notch portion 160 of the outer plate cam surface 156 at the end of the initial portion of the return stroke.

The operation of the return stroke latch system 120 during the initial portion of the return stroke restrains the outer carrier plates 66A, 66B against movement while allowing the inner carrier plate 68 to move in the second longitudinal direction 74 along the longitudinal axis 64. As described above, the linkage pin 96 is attached to and moves with the inner carrier plate 68. With the outer carrier plates 66A, 66B held stationary during the initial portion of the return stroke by the return stroke latching system, movement of the linkage pin 96 within the linkage slot 92 in the second longitudinal direction 74 along the longitudinal axis 64 moves the distal second end 88 of the linkage bar 76 away from the inner carrier plate 68 and the outer carrier plate 66A, 66B to thereby move the bale spear 78 along the spear axis 80 from the extended position into the retracted position for disengagement from the bale. As such, the bale spear 78 as actively and positively moved out of engagement with the bale via the mechanical interaction between the linkage pin 96 and the slot 92 of the linkage bar 76. This ensures that the bale spear 78 is completely withdrawn from the bale prior returning to the retracted position of the linear actuator 70 to prevent ripping crop out of the bale during the return stoke.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A bale ejection system (58) for a baler implement (20), the bale ejection system (58) comprising:
a frame rail (62) extending along a longitudinal axis (64);
an outer carrier plate (66A, 66B) and an inner carrier plate (68) moveably supported by the frame rail (62) for movement relative to the frame rail (62) along the longitudinal axis (64);
a linear actuator (70) attached to the inner carrier plate (68) and operable to extend during a push stroke to move the inner carrier plate (68) and the outer carrier plate (66A, 66B) in a first longitudinal direction (72) parallel to and along the longitudinal axis (64), and operable to retract during a return stroke to move the inner carrier plate (68) and the outer carrier plate (66A, 66B) in a second longitudinal direction (74) opposite to the first longitudinal direction (72) and parallel to and along the longitudinal axis (64);
a bale spear (78) coupled to the outer carrier plate (66A, 66B) via a linkage bar (76), wherein the linkage bar (76) is configured to move the bale spear (78) relative to the outer carrier plate (66A, 66B) and the inner carrier plate (68) between a retracted position and an extended position along a spear axis (80), wherein the spear axis (80) is perpendicular to the longitudinal axis (64) of the frame rail (62);
a push stroke latch system (106) interconnecting the frame, the inner carrier plate (68) and the outer carrier plate (66A, 66B), wherein the push stroke latch system (106) is configured to secure the outer carrier plate (66A, 66B) relative to the frame during an initial portion of the push stroke while allowing the inner carrier plate (68) to move along the longitudinal axis (64) in the first longitudinal direction (72) during the initial portion of the push stroke, whereby the linkage bar (76) moves the bale spear (78) along the spear axis (80) from the retracted position into the extended position for penetrating into a bale; and
a return stroke latch system (120) interconnecting the frame, the inner carrier plate (68) and the outer carrier plate (66A, 66B), wherein the return stroke latch system (120) is configured to secure the outer carrier plate (66A, 66B) relative to the frame during an initial portion of the return stroke while allowing the inner carrier plate (68) to move along the longitudinal axis (64) in the second longitudinal direction (74) during the initial portion of the return stroke, whereby the linkage bar (76) moves the bale spear (78) along the spear axis (80) from the extended position into the retracted position for disengaging from the bale.

2. The bale ejection system (58) set forth in claim 1, wherein the return stroke latch system (120) is configured to release the outer carrier plate (66A, 66B) from the frame rail (62) after the initial portion of the return stroke to allow combined movement of the outer carrier plate (66A, 66B) with the inner carrier plate (68) in the second longitudinal direction (74) along the longitudinal axis (64).

3. The bale ejection system (58) set forth in claim 1 or 2, wherein the return stroke latch system (120) includes an inner plate cam driver (122) attached to and moveable with the inner carrier plate (68) along the longitudinal axis (64), and an outer plate cam driver (114) attached to and moveable with the outer carrier plate (66A, 66B) along the longitudinal axis (64).

4. The bale ejection system (58) according to at least one of the preceding claims, wherein the return stroke latch system (120) includes a base plate (126) fixedly attached to the frame rail (62).

5. The bale ejection system (58) according to at least one of the preceding claims, wherein the return stroke latch system (120) includes a cam plate (134) moveably coupled to the base plate (126) for movement along a latch axis (136), wherein the latch axis (136) is transverse to the longitudinal axis (64) of the frame rail (62).

6. The bale ejection system (58) according to at least one of the preceding claims, wherein the return stroke latch system (120) includes a biasing device (142) engaged with the cam plate (134) and configured to bias the cam plate (134) in a first latch direction (144) along the latch axis (136) and into a latch position.

7. The bale ejection system (58) according to at least one of the preceding claims, wherein the cam plate (134) includes an inner plate cam surface (150) arranged for engagement with the inner plate cam driver (122), wherein the inner plate cam surface (150) includes a first wedge portion (152), wherein the inner plate cam driver (122) engages the first wedge portion (152) of the inner plate cam surface (150) during movement of the inner plate cam driver (122) in the first longitudinal direction (72) along the longitudinal axis (64) during the push stroke to move the cam plate (134) in a second latch direction (154) along the latch axis (136) and out of the latch position allowing the inner plate cam driver (122) to move past the inner plate cam surface (150) of the cam plate (134).

8. The bale ejection system (58) according to at least one of the preceding claims, wherein the cam plate (134) includes an outer plate cam surface (156) arranged for engagement with the outer plate cam driver (114), wherein the outer plate cam surface (156) includes a ramp portion (158) and a notch portion (160), wherein the outer plate cam driver (114) engages the ramp portion (158) of the outer plate cam surface (156) during movement of the outer plate cam driver (114) in the first longitudinal direction (72) along the longitudinal axis (64) during the push stroke to move the cam plate (134) in the second latch direction (154) along the latch axis (136) allowing the outer plate cam driver (114) to move past the ramp portion (158) and into the notch portion (160), whereafter the biasing device (142) is operable to bias the cam plate (134) in the first latch direction (144) along the latch axis (136) to capture the outer plate cam driver (114) within the notch portion (160) at the end of the push stroke and hold the outer carrier plate (66A, 66B) in place relative to the inner carrier plate (68) during the initial portion of the return stroke.

9. The bale ejection system (58) according to at least one of the preceding claims, wherein the inner plate cam surface (150) includes a second wedge portion (162), and wherein the inner plate cam driver (122) engages the second wedge portion (162) of the inner plate cam surface (150) during movement of the inner plate cam driver (122) in the second longitudinal direction (74) along the longitudinal axis (64) during the return stroke to move the cam plate (134) in the second latch direction (154) along the latch axis (136) and out of the latch position allowing the inner plate cam driver (122) to move past the inner plate cam surface (150) of the cam plate (134) and releasing the outer plate cam driver (114) from the notch portion (160) of the outer plate cam surface (156) at the end of the initial portion of the return stroke.

10. The bale ejection system (58) according to at least one of the preceding claims, wherein the return stroke latch system (120) includes a housing plate (128) forming an interior cavity (130) formed to capture a base portion (138) of the cam plate (134) such that the base portion (138) of the cam plate (134) is moveable within the interior cavity (130) along the latch axis (136).

11. The bale ejection system (58) according to at least one of the preceding claims, wherein the return stroke latch system (120) includes a cover (148) attached to the housing plate (128) and configured to seal the interior cavity (130).

12. The bale ejection system (58) according to at least one of the preceding claims, wherein the biasing device (142) is disposed within the interior cavity (130), and biases the cam plate (134) against the housing plate (128).

13. The bale ejection system (58) according to at least one of the preceding claims, wherein the inner plate cam driver (122) and the outer plate cam driver (114) are spaced apart from each other along the longitudinal axis (64) a distance equal to a length of the initial portion of the return stroke along the longitudinal axis (64).

14. The bale ejection system (58) according to at least one of the preceding claims, wherein the inner plate cam driver (122) includes a pin extending outwardly away from the inner carrier plate (68) in a direction transverse to the longitudinal axis (64) of the frame rail (62), and wherein the outer plate cam driver (114) includes a pin extending outwardly away from the outer carrier plate (66A, 66B) in a direction transverse to the longitudinal axis (64) of the frame rail (62).

15. The bale ejection system (58) according to at least one of the preceding claims, wherein the push stroke latch system (106) is configured to release the outer carrier plate (66A, 66B) from the frame rail (62) after the initial portion of the push stroke to allow combined movement of the outer carrier plate (66A, 66B) with the inner carrier plate (68) in the first longitudinal direction (72) along the longitudinal axis (64).
